(19) Europäisches Patentamt
European Patent Office
Office européen des brevets

(11) **EP 4 200 971 B1**

(12) **EUROPÄISCHE PATENTSCHRIFT**

(45) Veröffentlichungstag und Bekanntmachung des Hinweises auf die Patenterteilung:
**15.01.2025   Patentblatt 2025/03**

(21) Anmeldenummer: **21762434.5**

(22) Anmeldetag: **12.08.2021**

(51) Internationale Patentklassifikation (IPC):
$F04D\ 13/06\ ^{(2006.01)}$    $G01H\ 1/00\ ^{(2006.01)}$
$G01H\ 3/08\ ^{(2006.01)}$    $F04D\ 15/00\ ^{(2006.01)}$
$G10K\ 11/16\ ^{(2006.01)}$    $H02P\ 23/14\ ^{(2006.01)}$

(52) Gemeinsame Patentklassifikation (CPC):
**H02P 23/14; F04D 13/06; F04D 15/0066; F04D 15/0088; G01H 1/003; G01H 3/08; G10K 11/16;** F05D 2270/3015; F05D 2270/334; H02P 2207/01

(86) Internationale Anmeldenummer:
**PCT/EP2021/072446**

(87) Internationale Veröffentlichungsnummer:
**WO 2022/038026 (24.02.2022 Gazette 2022/08)**

(54) **VERFAHREN ZUR BESTIMMUNG EINER SYNCHRONDREHZAHL**

METHOD FOR DETERMINING A SYNCHRONOUS SPEED

PROCÉDÉ DE DÉTERMINATION D'UNE VITESSE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **18.08.2020   DE 102020005050**

(43) Veröffentlichungstag der Anmeldung:
**28.06.2023   Patentblatt 2023/26**

(73) Patentinhaber: **KSB SE & Co. KGaA**
**67227 Frankenthal (DE)**

(72) Erfinder:
• **JANJIC, Boris**
**67227 Frankental (DE)**
• **KLUNKE, Tobias**
**67227 Frankenthal (DE)**
• **MADES, Jochen**
**67227 Frankenthal (DE)**

(56) Entgegenhaltungen:
EP-B1- 2 433 010         DE-A1- 102006 008 048
DE-A1- 102009 022 107    DE-A1- 102017 213 131

**Beschreibung**

Die vorliegende Erfindung betrifft ein Verfahren zur Bestimmung einer Synchrondrehzahl einer elektrischen Maschine bei einer durch die elektrische Maschine angetriebenen Arbeitsmaschine. Ferner bezieht sich die Erfindung auf eine Verarbeitungsvorrichtung, ein System sowie ein Computerprogramm.

Bei dem Betrieb einer Pumpenanordnung, insbesondere einer Kreiselpumpenanordnung, bestehend aus Pumpe und diese antreibende elektrische Maschine, insbesondere Asynchronmaschine, ist häufig eine Aussage über deren Betriebspunkt erforderlich. Der Betriebspunkt einer Strömungsarbeitsmaschine, insbesondere einer Kreiselpumpe, auf deren Förderstrom-Förderhöhen-Kennlinie oder Q-H-Kennlinie, ist insbesondere durch deren Förderstrom, nachfolgend auch Fördermenge genannt, charakterisiert. Zu dessen Ermittlung gibt es verschiedene Möglichkeiten. Er kann über die Messung des Förderstroms oder durch eine Druckmessung bestimmt werden. Bei Letzterer wird üblicherweise die Differenz des Druckes zwischen Druck und Saugseite der Pumpe gemessen. Die Förderhöhe wird als Quotient aus Druckdifferenz, Dichte und Erdbeschleunigung abgeschätzt. Bei Wasser als Förderfluid entspricht eine Druckdifferenz von 1 bar einer Förderhöhe von ca. 10 Metern. Weiterhin wird ein Betriebspunkt einer Kreiselpumpe durch eine elektrische Messung bestimmt, wobei aus einer Strom- und Spannungsmessung die abgegebene Motorleistung unter Berücksichtigung des Wirkungsgrades des Motors berechnet wird.

Aus der DE 10 2009 022 107 A1 sowie der EP 2 433 010 B1 ist eine Vorrichtung und ein Verfahren bekannt, um den Betriebspunkt einer Arbeitsmaschine und/oder eines diese antreibenden Asynchronmotors zu bestimmen. Das darin offenbarte Verfahren bzw. die darin offenbarte Vorrichtung kann für ungeregelte bzw. am Netz laufende Asynchronmaschinen angewendet werden, da in diesen Fällen die Synchrondrehzahl der elektrischen Maschine bekannt ist. Die Synchrondrehzahl ergibt sich hierbei z. B. aus der Netzfrequenz multipliziert mit der Polpaarzahl. Problematisch ist hingegen die Bestimmung des Betriebspunktes der Arbeitsmaschine, falls diese von einer drehzahlgeregelten Asynchronmaschine angetrieben wird, und somit die Synchrondrehzahl nicht bekannt ist.

Die DE 10 2017 213 131 A1 offenbart die Steuerung eines Aktuators durch Ermitteln einer Geräuschemission und/oder Vibrationsemission mittels zumindest eines akustischen Sensors, während der Aktuator an einem vordefinierten Betriebspunkt betrieben wird, und Verändern des Betriebspunkts des Aktuators, wenn die Geräuschemission und/oder Vibration in einem vordefinierten ungewünschten Bereich liegt.

Die DE 10 2006 008 048 A1 offenbart eine Motordrehzahlerfassungsvorrichtung zum Erfassen einer Drehzahl eines Rotors eines Induktionsmotors, wobei der Rotor durch Erregung eines Stators des Motors mittels eines Wechselstromsignals zum Drehen angetrieben wird, mit einer Steuervorrichtung, die einen Oberwellenanteil einer Frequeunz in das Wechselstromsignal einfügt, die höher als die Erregungsfrequenz des Wechselstromsignals ist, und einer Filterschaltung, die aus einem Wechselstromsignal einen Frequenzanteil extrahiert, der innerhalb des Extraktionsfrequenzbandes liegt, das durch die Filterschaltung eingestellt worden ist.

Es ist daher eine Aufgabe der vorliegenden Erfindung, die voranstehend beschriebenen Probleme zumindest teilweise zu beheben. Insbesondere ist es Aufgabe der vorliegenden Erfindung, eine verbesserte Möglichkeit zur Bestimmung einer Synchrondrehzahl vorzuschlagen, und/oder eine Anwendung eines bekannten Verfahrens zur Betriebspunktbestimmung ohne Verwendung elektrischer Messgrößen für drehzahlgeregelte Asynchronmaschinen zu erweitern.

Die voranstehende Aufgabe wird gelöst durch ein Verfahren mit den Merkmalen des Anspruchs 1, eine Verarbeitungsvorrichtung mit den Merkmalen des Anspruchs 12, ein System mit den Merkmalen des Anspruchs 13 sowie durch ein Computerprogramm mit den Merkmalen des Anspruchs 15. Weitere Merkmale und Details der Erfindung ergeben sich aus den jeweiligen Unteransprüchen, der Beschreibung und den Zeichnungen.

Die Aufgabe wird gelöst durch ein Verfahren zur Bestimmung einer Synchrondrehzahl einer elektrischen Maschine, insbesondere drehzahlgeregelten Asynchronmaschine und/oder Synchronmaschine und/oder rotierenden elektrischen Maschine und/oder eines Elektromotors, insbesondere eines Asynchronmotors, bei einer durch die elektrische Maschine angetriebenen Arbeitsmaschine, insbesondere einer Pumpenanordnung.

Hierbei kann vorteilhafterweise eine (elektrische) Regelungsvorrichtung wie ein Frequenzumrichter zur Drehzahlregelung der elektrischen Maschine, insbesondere Asynchronmaschine, vorgesehen sein.

Ferner können die nachfolgenden Verfahrensschritte durchgeführt werden, vorzugsweise nacheinander in der angegebenen oder in einer beliebigen Reihenfolge, wobei einzelne und/oder sämtliche Schritte auch wiederholt durchgeführt werden können:

- Initiieren und/oder Durchführen einer Erfassung wenigstens einer (insbesondere mechanischen) Messgröße bei der elektrischen Maschine und/oder der Arbeitsmaschine, vorzugsweise um eine für einen Drehklang der elektrischen Maschine und/oder der Arbeitsmaschine und/oder für die Synchrondrehzahl spezifische Erfassungsinformation, insbesondere in der Form einer Geräuschinformation und/oder eines zeitlichen Verlaufs der Messgröße, zu erhalten,

- Durchführen einer Signalanalyse, insbesondere Frequenzanalyse, der Erfassungsinformation, um ein Spektrum, insbesondere Frequenzspektrum, der Erfassungsinformation zu erhalten,

- Durchführen einer Auswahl wenigstens eines Bereichs im Spektrum, insbesondere wenigstens eines Frequenzbereichs im Frequenzspektrum, vorzugsweise anhand einer (insbesondere vorbekannten und/oder manuell eingegebenen) Taktfrequenz der Regelungsvorrichtung, wobei alternativ oder zusätzlich die Auswahl von mehreren unterschiedlichen Bereichen auch anhand wenigstens einer Vielfachen der Taktfrequenz und/oder unterschiedlicher Vielfache der Taktfrequenz erfolgen kann,

- Durchführen einer Erkennung wenigstens eines Spitzenwertes (Peaks) in dem (jeweiligen, ausgewählten) Bereich, insbesondere Frequenzbereich, um wenigstens eine oder genau zwei oder wenigstens zwei für die Synchrondrehzahl spezifische Frequenz(en) (in diesem jeweiligen Bereich) zu ermitteln, wobei die Frequenz(en) jeweils eine Frequenz einer Oberschwingung sein kann bzw. sein können, also insbesondere Frequenzen, welche durch Oberschwingungen der Regelungsvorrichtung angeregt werden,

- Durchführen der Bestimmung der Synchrondrehzahl anhand der wenigstens einen ermittelten Frequenz.

Dies hat den Vorteil, dass auch ohne einen Zugriff auf elektrische Messgrößen der Arbeitsmaschine, insbesondere der elektrischen Maschine und/oder der Regelungsvorrichtung, und/oder ohne Kenntnis der Regelungsparameter der Regelungsvorrichtung die Synchrondrehzahl bestimmt werden kann. Die Regelungsparameter sind bspw. eine eingestellte Drehzahl und/oder eine Steuergröße oder dergleichen, welche zur Drehzahlregelung verwendet werden. Bei einer drehzahlgeregelten elektrischen Maschine bzw. Asynchronmaschine kann ferner die Synchrondrehzahl von der Nenndrehzahl abweichen, und bspw. immer knapp über der Nenndrehzahl liegen. Das magnetische Drehfeld bei der Asynchronmaschine induziert in den Läufersträngen insbesondere nur dann Spannungen und Ströme, wenn der Läufer asynchron zum magnetischen Drehfeld umläuft. Die Differenzdrehzahl zwischen Drehfeld und Läufer bezogen auf die Drehfelddrehzahl, d. h. die Synchrondrehzahl, bezeichnet man als Schlupf.

Es ist möglich, dass die Schritte des Durchführens der Auswahl und des Durchführens der Erkennung und des Durchführens der Bestimmung der Synchrondrehzahl für unterschiedliche Bereiche im Spektrum durchgeführt werden, welche die Taktfrequenz und/oder eine Vielfache der Taktfrequenz und/oder unterschiedliche Vielfache der Taktfrequenz umfassen. Bspw. können mindestens zwei oder mindestens drei unterschiedliche Bereiche im Spektrum anhand der Taktfrequenz und/oder einer Vielfachen der Taktfrequenz und/oder unterschiedlicher Vielfache der Taktfrequenz ausgewählt werden. Jeder der Bereiche kann daher eine unterschiedliche Vielfache der Taktfrequenz oder auch die Taktfrequenz selbst umfassen. In den Bereichen können jeweils die Spitzenwerte erkannt werden, um jeweils die Frequenzen zu ermitteln, die für die Synchrondrehzahl spezifisch sind. Für jeden Bereich kann dann jeweils ein Wert für die Synchrondrehzahl anhand der darin ermittelten Frequenzen ermittelt werden. Die ermittelten Werte können ferner zur Erhöhung der Genauigkeit gemeinsam zur Bestimmung der Synchrondrehzahl verwendet werden. Das Durchführen der Auswahl anhand der Taktfrequenz umfasst somit auch das Durchführen der Auswahl anhand wenigstens einer Vielfachen der Taktfrequenz.

Es erfolgt vorteilhafterweise die Bestimmung der Synchrondrehzahl anhand der Erfassung wenigstens einer solchen Messgröße, welche lediglich als Nebeneffekt des Betriebs der elektrischen Maschine bzw. Arbeitsmaschine auftritt, gleichwohl aber Rückschlüsse auf die Synchrondrehzahl bietet. Dies kann konkret ein Schall (z. B. Körper- oder Luftschalldruck) sein, sodass die Messgröße auch als ein durch die elektrische Maschine bzw. Arbeitsmaschine abgestrahltes Geräusch aufgefasst werden kann. Dabei kann die Messgröße Informationen über die Synchrondrehzahl bereitstellen. Diese Informationen können auch aus einer grundsächlich als störend angesehenen Auswirkung des Betriebs resultieren, wie z. B. ein Geräuschverhalten der Regelungsvorrichtung. Die Informationen können ferner für den Drehklang der elektrischen Maschine und/oder Arbeitsmaschine spezifisch sein, also z. B. als das Geräusch durch periodische Wechselkräfte bei der elektrischen Maschine und/oder Arbeitsmaschine hervorgerufen werden. Die Erfassung der Messgröße dient dabei dazu, diese Informationen durch die Erfassungsinformation einer Verarbeitung zugänglich zu machen. Hierzu kann bei der Erfassung eine Wandlung der Messgröße zur Erfassungsinformation erfolgen, bspw. durch einen Schallwandler und/oder durch eine Analog-Digital-Wandlung.

Die Regelungsvorrichtung kann zur Drehzahlregelung der elektrischen Maschine bzw. Asynchronmaschine wenigstens einen leistungselektronischen Schalter aufweisen, insbesondere in der Form von gesteuerten Brücken. Der wenigstens eine Schalter kann z. B. als ein Leistungstransistor ausgebildet sein, vorzugsweise als ein Metall-Oxid-Halbleiter-Feldeffekttransistor (MOSFET), Sperrschicht-Feldeffekttransistor (JFET), Insulated Gate Bipolar Transistor (IGBT) oder als IGC-Thyristoren. Ferner kann bei der Regelungsvorrichtung durch eine Pulsweitenmodulation (PWM) eine veränderliche Ausgangsspannung erzeugt werden. Auf diese Weise können die Höhe der resultierenden Ausgangsspannung und auch deren Frequenz in weiten Grenzen geregelt werden.

Es ist möglich, dass die Erfassungsinformation dadurch für den Drehklang und/oder die Synchrondrehzahl spezifisch ist, dass die Erfassungsinformation aus einer Geräuschentwicklung bei der elektrischen Maschine und/oder Arbeitsmaschine resultiert. Konkret bei der Verwendung einer PWM-Taktfrequenz im Hörbereich für die Regelungsvorrichtung können störende Geräusche entstehen. Diese werden z. B. durch mechanische Schwingungen des Stators hervorgerufen. Eine Erhöhung der Taktfrequenz kann zwar zur Reduzierung dieses Effektes, allerdings auch zur Erhöhung einer Verlustleistung des Frequenzumrichters führen. Erfindungsgemäß kann die Geräuschentwicklung allerdings auch dazu genutzt werden, um anhand der Geräuschentwicklung die Synchrondrehzahl der elektrischen Maschine zu bestimmen. Die entstehenden Geräusche bei der elektrischen Maschine können z. B. durch die Erfassung der Messgröße als Erfassungsinformation einer Verarbeitung (also der weiteren Verfahrensschritte wie der Signalanalyse usw.) verfügbar gemacht werden, um durch die Verarbeitung die Synchrondrehzahl zu bestimmen. Dabei kann sich der Effekt zunutze gemacht werden, dass die Synchrondrehzahl einen Einfluss auf diese Geräusche hat, insbesondere durch eine Amplitudenmodulation der Drehfrequenz der Regelungsvorrichtung. Daher können auch die durch die Erkennung des wenigstens eines Spitzenwertes ermittelten Frequenzen für die Synchrondrehzahl spezifisch sein.

Es ist ferner denkbar, dass wenigstens eine Fensterung des Frequenzspektrums zur Auswahl des wenigstens einen Frequenzbereichs durchgeführt wird. Hierbei kann jeweils eine Fensterbreite und/oder eine Fensterposition für die Fensterung (also des Fensters) derart festgelegt sein, dass durch die anschließende Erkennung des wenigstens einen Spitzenwertes oder wenigstens zwei oder genau zwei Spitzenwerten im jeweiligen Frequenzbereich nur (eine oder mehrere) solche Frequenzen des Frequenzbereichs ermittelt werden, die für die Synchrondrehzahl spezifisch sind. Wie zuvor beschrieben, kann anhand der Erfassungsinformation ein Rückschluss auf die Synchrondrehzahl erfolgen. Insbesondere hat die Synchrondrehzahl dabei eine Auswirkung auf das Spektrum der Erfassungsinformation. Bspw. werden bei einer PWM für die Synchrondrehzahl charakteristische Schwingungen angeregt, deren Frequenzen um die Taktfrequenz bzw. einer Vielfachen der Taktfrequenz der Regelungsvorrichtung auftreten. Der Abstand dieser Frequenzen zur Taktfrequenz bzw. Vielfachen kann hierbei von der Synchrondrehzahl abhängig sein. Die Fensterparameter Fensterbreite und/oder Fensterposition können dann so festgelegt werden, dass der aus der wenigstens einen Fensterung resultierende wenigstens eine Frequenzbereich diese Frequenzen umfasst, andere ähnlich starke oder stärkere Frequenzen im Frequenzspektrum jedoch ausgrenzt. Dies hat den Vorteil, dass bei der anschließenden Erkennung der Spitzenwerte lediglich diese Frequenzen ermittelt werden. Die konkrete Festlegung der Fensterparameter zur Erzielung dieser gewünschten Funktion kann z. B. durch eine manuelle Einstellung in der Art einer Kalibrierung erfolgen, bevor das erfindungsgemäße Verfahren verwendet wird.

Ferner ist es denkbar, dass die Regelungsvorrichtung als ein Frequenzumrichter ausgebildet ist. Alternativ oder zusätzlich kann der wenigstens eine Frequenzbereich um die Taktfrequenz und/oder um wenigstens eine Vielfache der Taktfrequenz ausgewählt werden, und vorzugsweise jeweils die Taktfrequenz bzw. die Vielfache der Taktfrequenz als Mittenfrequenz aufweisen. Somit wird bei der Auswahl wenigstens ein Fenster zur Auswahl des wenigstens einen Frequenzbereiches zentral um die Taktfrequenz und/oder die wenigstens eine Vielfache der Taktfrequenz bei der Fensterung gelegt. Auf diese Weise können die Frequenzen ausgewählt werden, die in einem Abstand zu dieser Taktfrequenz und/oder Vielfachen der Taktfrequenz auftreten, wobei dieser Abstand abhängig von der Synchrondrehzahl sein kann. In anderen Worten können bei der Auswahl ein oder mehrere Fensterungen durchgeführt werden, wodurch jeweils ein Frequenzbereich um die Taktfrequenz und/oder eine Vielfache davon erhalten wird.

Ferner ist es optional vorgesehen, dass das Durchführen der Auswahl die nachfolgenden Schritte umfasst:

- Festlegen (wenigstens) einer Fensterbreite anhand einer vordefinierten erwarteten Synchrondrehzahl,

- Festlegen (wenigstens) einer Fensterposition anhand der Taktfrequenz, insbesondere an der Taktfrequenz und/oder wenigstens einer Vielfachen der Taktfrequenz, z. B. an der Position der Taktfrequenz bzw. Vielfachen der Taktfrequenz, sodass die Taktfrequenz bzw. Vielfache der Taktfrequenz die Mittenfrequenz für den Frequenzbereich bildet,

- Durchführen wenigstens einer Fensterung des Frequenzspektrums jeweils zur Auswahl des Frequenzbereichs als einen Bereich um die Taktfrequenz bzw. die Vielfache der Taktfrequenz mit der festgelegten Fensterbreite und Fensterposition.

Dieses Vorgehen ermöglicht es, nur die relevanten Frequenzen auszuwählen, die zur Bestimmung der Synchrondrehzahl dienen können. Es ist möglich, dass die vorgenannten Schritte zum Durchführen der Auswahl wiederholt für unterschiedliche Fensterpositionen durchgeführt werden, welche vorzugsweise anhand und/oder an der Taktfrequenz und/oder einer Vielfachen der Taktfrequenz und/oder unterschiedlicher der Vielfachen der Taktfrequenz festgelegt werden. In anderen Worten kann die Fensterung auch mehrfach für unterschiedliche Bereiche durchgeführt werden, und es können durch die Fensterungen mehrere Frequenzbereiche als Bereiche um die Taktfrequenz und/oder unterschiedliche Vielfache der Taktfrequenz ausgewählt werden. Für jeden der ausgewählten Frequenzbereiche kann vorteilhafterweise ein Wert für die Synchrondrehzahl anhand der darin ermittelten Frequenzen geschätzt werden, um anhand dieser Werte die Synchrondrehzahl zu bestimmen.

4

Des Weiteren ist es denkbar, dass die Taktfrequenz im Bereich von 1 kHz bis 20 kHz, vorzugsweise 2 kHz bis 16 kHz, bevorzugt 4 kHz bis 12 kHz liegt. Entsprechend kann der Bereich eingegrenzt werden, in welchem die Auswahl des Frequenzbereiches erfolgt.

Ferner ist es optional vorgesehen, dass sich die mechanische Messgröße von einer elektrischen Messgröße der elektrischen Maschine und/oder der Regelungsvorrichtung unterscheidet, und vorzugsweise unabhängig von einem Regelungsparameter der Regelungsvorrichtung erfasst wird. Damit kann das erfindungsgemäße Verfahren auch ohne direkten Zugriff auf die Regelungsvorrichtung und/oder die elektrische Maschine durchgeführt werden, z. B. lediglich durch die Erfassung der Messgröße wie eines Schalldrucks oder dergleichen.

Vorzugsweise kann vorgesehen sein, dass die mechanische Messgröße wenigstens eine der nachfolgenden Messgrößen umfasst:

- einen Druck,

- einen Differenzdruck,

- eine Kraft,

- eine Vibration,

- einen Körperschall,

- einen Luftschall.

Dies ermöglicht eine Durchführung des erfindungsgemäßen Verfahrens ohne direkte Kontaktierung der elektrischen Maschine und/oder Arbeitsmaschine, bspw. durch eine erfindungsgemäße Verarbeitungsvorrichtung, bspw. in der Form einer mobilen Messvorrichtung.

Auch ist es optional denkbar, dass eine Fensterbreite des Frequenzbereichs derart festgelegt ist, dass bei der anschließenden Erkennung genau zwei oder wenigstens zwei Spitzenwerte erkannt werden, um bei den Spitzenwerten jeweils eine der für die Synchrondrehzahl spezifischen Frequenzen zu ermitteln, wobei anhand einer Frequenzdifferenz der ermittelten Frequenzen die Synchrondrehzahl bestimmt wird. Dies ermöglicht eine zuverlässige Ermittlung der Synchrondrehzahl.

Nach einer weiteren Möglichkeit kann vorgesehen sein, dass die Fensterbreite des Frequenzbereichs mindestens das Zweifache oder mindestens das Vierfache einer zu erwartenden Synchronfrequenz (gemäß der Synchrondrehzahl) beträgt. Damit ist es möglich, zuverlässig den Bereich der relevanten Frequenzen einzugrenzen. Die Fensterbreite kann z. B. maximal das Zweifache oder das Dreifache oder das Vierfache oder das Sechsfache der erwarteten Synchrondrehzahl betragen.

Ebenfalls Gegenstand der Erfindung ist eine Verarbeitungsvorrichtung, bspw. eine Messvorrichtung, welche auch zur Verarbeitung, insbesondere Datenverarbeitung, ausgeführt ist. Hierbei ist vorgesehen, dass die Verarbeitungsvorrichtung für die Verarbeitung Mittel aufweist, die zur Ausführung der Schritte eines erfindungsgemäßen Verfahrens vorgesehen sind. Damit bringt die erfindungsgemäße Verarbeitungsvorrichtung die gleichen Vorteile mit sich, wie sie ausführlich mit Bezug auf ein erfindungsgemäßes Verfahren beschrieben worden sind.

Es ist ein System vorgesehen, aufweisend:

- eine Arbeitsmaschine, insbesondere eine Pumpenanordnung,
- eine elektrische Maschine, insbesondere eine drehzahlgeregelte Asynchronmaschine, insbesondere der Arbeitsmaschine, zum Antreiben der Arbeitsmaschine, vorzugsweise um eine Drehbewegung bei der Arbeitsmaschine zur Förderung eines zu fördernden Mediums zu erzeugen,
- eine Regelungsvorrichtung der Arbeitsmaschine und insbesondere der elektrischen Maschine, vorzugsweise zur Drehzahlregelung der elektrischen Maschine, insbesondere um eine aktuelle Drehzahl der Drehbewegung einzustellen,
- eine erfindungsgemäße Verarbeitungsvorrichtung.

Ferner kann es im Rahmen der Erfindung vorgesehen sein, dass die Arbeitsmaschine als eine Pumpenanordnung, insbesondere Kreiselpumpenanordnung, ausgebildet ist, und/oder die Verarbeitungsvorrichtung separat von der Arbeitsmaschine ausgeführt ist, insbesondere in der Form eines mobilen Geräts.

Ebenfalls Gegenstand der Erfindung ist ein Computerprogramm, insbesondere Computerprogrammprodukt, umfassend Befehle, die bei der Ausführung des Computerprogramms durch eine erfindungsgemäße Verarbeitungsvorrichtung diese veranlassen, ein erfindungsgemäßes Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind. Zur Ausführung des Computerprogramms kann die Verarbeitungsvorrichtung einen Prozessor aufweisen, welcher hierzu das Computerprogramm aus einem nicht-flüchtigen Speicher der Verarbeitungsvorrichtung ausliest.

Die erfindungsgemäße Lösung kann verwendet werden, um das in der Schrift EP 2 433 010 B1 beschriebene Verfahren durchzuführen und/oder die darin beschriebene Vorrichtung zur Betriebspunktbestimmung zu betreiben. Konkret können das erfindungsgemäße Verfahren und/oder die erfindungsgemäße Verarbeitungsvorrichtung verwendet werden, um zu diesem Zweck die Synchrondrehzahl (nachfolgend auch als synchrone Drehzahl bezeichnet) zu bestimmen. Es wird daher Bezug genommen auf das vorgenannte Patentdokument und auch auf die zugehörige Anmeldung (WO 2010/133425), deren Inhalt hiermit in diese Anmeldung aufgenommen wird. Damit ist ein Vorteil der vorliegenden Erfindung, dass der Anwendungsumfang des vorgenannten Patents auf drehzahlgeregelte Asynchronmaschinen erweitert werden kann.

Beispielsweise kann es vorgesehen sein, dass die bestimmte Synchrondrehzahl verwendet wird, um einen Betriebspunkt der Arbeitsmaschine zu bestimmen. Somit kann das erfindungsgemäße Verfahren basierend auf der Bestimmung der Synchrondrehzahl auch zur Betriebspunktbestimmung der Arbeitsmaschine bzw. der die Arbeitsmaschine antreibenden elektrischen Maschine verwendet werden. Die Arbeitsmaschine kann bspw. durch die drehzahlgeregelte Asynchronmaschine (als die elektrische Maschine) angetrieben werden, bei welcher die Bestimmung der Synchrondrehzahl herkömmlich nicht oder nur technisch aufwendig möglich ist. Der Betriebspunkt kann durch eine von der Arbeitsmaschine aufgenommene Leistung und/oder deren Fördermenge charakterisiert sein.

So ist es z. B. denkbar, dass die nachfolgenden Schritte durchgeführt werden, um den Betriebspunkt anhand der Synchrondrehzahl und einer davon abweichenden aktuellen Drehzahl der Arbeitsmaschine zu bestimmen:

- Ermitteln einer zum Drehklang der Arbeitsmaschine und/oder elektrischen Maschine linear proportionalen Drehklangfrequenz aus dem Frequenzspektrum,

- Bestimmen der aktuellen Drehzahl der Arbeitsmaschine anhand der ermittelten Drehklangfrequenz,

- Bestimmen einer Drehzahl-Drehmoment-Kennlinie der elektrischen Maschine, bspw. zumindest anhand vorgegebener Motorparameter wie Bemessungsleistung und/oder Bemessungsdrehzahl und/oder der Synchrondrehzahl,

- Bestimmen einer von der Arbeitsmaschine aufgenommenen Leistung aus der ermittelten aktuellen Drehzahl und der Drehzahl-Drehmoment-Kennlinie, wobei der Betriebspunkt durch die aufgenommene Leistung charakterisiert wird.

Zur Erfassung der wenigstens einen Messgröße können ein oder mehrere Sensoren genutzt werden, welche die Messgröße als betriebspunktabhängige Messgröße der Arbeitsmaschine erfassen. Die auf diese Weise ermittelten Messwerte können während eines Betriebs der Arbeitsmaschine durch ein erfindungsgemäßes Verfahren ausgewertet und/oder gespeichert werden. Es kann weiter bei der Erfindung vorgesehen sein, dass der Betriebspunkt ohne die Verwendung von elektrischen Messgrö-ßen des antreibenden Asynchronmotors bestimmt wird. Hierzu kann aus einer mechanischen Messgröße wie Druck, Differenzdruck, Kraft, Vibration, Körperschall oder Luftschall mittels einer Signalanalyse, insbesondere einer Frequenzanalyse, eine zum Drehklang der Arbeitsmaschine und/oder elektrischen Maschine linear proportionale Frequenz (Drehklangfrequenz) ermittelt werden. Daraus kann die Drehzahl der Antriebsmaschine ermittelt und kann aus der schlupfbedingten Drehzahl-Drehmoment-Abhängigkeit des Asynchronmotors der Betriebspunkt bestimmt werden. Ferner kann die aufgenommene Leistung der Arbeitsmaschine durch folgende Schritte bestimmt werden (die elektrische Maschine wird nachfolgend kurz als Motor bezeichnet):

- Bestimmung der Drehzahl-Drehmoment-Kennlinie des Motors, insbesondere durch vorgegebene Motorparameter wie Bemessungsleistung und Bemessungsdrehzahl, gegebenenfalls synchrone Drehzahl, Kippmoment, Kippdrehzahl oder Kippschlupf.

- Bestimmung der aufgenommenen Leistung oder des Drehmomentes des Motors aus ermittelter Antriebsdrehzahl (d. h. der aktuellen Drehzahl) und Drehzahl-Drehmoment-Kennlinie des Motors.

Bei einer Pumpe, insbesondere einer Kreiselpumpe, als Arbeitsmaschine kann es vorgesehen sein, dass die Ermittlung einer Fördermenge der Pumpe aus der Antriebsdrehzahl erfolgt. An der Pumpe werden dann lediglich mechanische Messgrö-ßen erfasst. Aus der ermittelten Drehklangfrequenz kann die Antriebs- oder Wellendrehzahl der Pumpe ermittelt werden. Gegenüber einer direkten Messung der Fördermenge beispielsweise mittels Ultraschall-Durchflussmesstechnik oder magnetisch-induktiver Durchflussmesstechnik besteht ein erheblicher Kostenvorteil. Auch gegenüber einer Ermittlung der Fördermenge auf Basis einer elektrischen Wirkleistungsmessung sind Aufwand und Kosten minimiert.

Die erfindungsgemäße Verarbeitungsvorrichtung kann an der Pumpe, an deren Antriebsmotor oder in deren Umfeld angeordnet sein und/oder mit der Pumpe oder deren Antriebsmotor integriert ausgeführt sein.

Die erfindungsgemäße Verarbeitungsvorrichtung kann ferner die Fördermenge der Pumpe, insbesondere Kreiselpumpe, aus der aus der Antriebsdrehzahl oder Wellendrehzahl ermittelten aufgenommen Leistung oder Wellenleistung bestimmen.

Es hat sich als zweckmäßig erwiesen, dass die erfindungsgemäße Verarbeitungsvorrichtung die Fördermenge der Pumpe, insbesondere Kreiselpumpe, aus Parametern des Motors, die eine Drehzahl-Drehmoment-Kennlinie des Motors beschreiben, sowie aus Parametern der Pumpe, die eine Förderstrom-Leistungs-Kennlinie beschreiben, und der Antriebsdrehzahl oder Wellendrehzahl bestimmt.

Ebenso kann es vorgesehen sein, dass die erfindungsgemäße Verarbeitungsvorrichtung die Fördermenge der Pumpe, insbesondere Kreiselpumpe, direkt aus einer Kennlinie, die die lastabhängige Drehzahländerung über der Fördermenge der Pumpe darstellt, bestimmt. Eine solche Kennlinie kann durch Testläufe ermittelt und in dem Datenspeicher gespeichert sein, sodass sie während des Betriebs der Kreiselpumpe abrufbar ist. Hier wird gleichwohl die Drehzahl-Drehmoment-Abhängigkeit des Asynchronmotors verwendet, die zu einer Drehzahlveränderung über den Förderstrombereich führt. Daraus kann der durch die von der Arbeitsmaschine aufgenommene Leistung und/oder deren Fördermenge charakterisierte Betriebspunkt besonders einfach bestimmt werden.

In einem Datenspeicher der erfindungsgemäßen Verarbeitungsvorrichtung können Motorparameter, die die Drehzahl-Drehmoment-Abhängigkeit des Asynchronmotors beschreiben, und/oder andere technologische Daten der Arbeitsmaschinenanordnung abgespeichert sein. Auf diese kann während des Betriebs der Arbeitsmaschine zwecks Bestimmung des Betriebspunkts zugegriffen werden. Eine Erfassung von elektrischen Messgrößen durch die Verarbeitungsvorrichtung ist nicht notwendig. Die Verarbeitungsvorrichtung kann aus einem einzigen Messsignal, beispielsweise einem Drucksensorsignal, den Betriebspunkt der Arbeitsmaschine bestimmen.

Auch kann es vorgesehen sein, dass die erfindungsgemäße Verarbeitungsvorrichtung mindestens einen Anschluss für einen Drucksensor aufweist und aus Messwerten eines angeschlossenen Drucksensors die Antriebsdrehzahl oder Wellendrehzahl zur Bestimmung des Betriebspunktes der Arbeitsmaschine ermittelt. Drucksensoren zur Erfassung statischer Drücke sind ebenfalls im Stande, dynamische Druckschwankungen zu erfassen. Solche Drucksensoren sind ohnehin an vielen Pumpen angebracht, insbesondere um deren Enddruck zu erfassen.

Die zur Durchführung der einzelnen Verfahrensschritte notwendigen Parameter können in einem Datenspeicher der erfindungsgemäßen Verarbeitungsvorrichtung abgespeichert bzw. hinterlegt sein und stehen damit zur Durchführung der einzelnen Verfahrensschritte zur Verfügung.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1    eine schematische Darstellung zur Visualisierung eines erfindungsgemäßen Verfahrens,

Fig. 2    eine schematische Darstellung von Teilen eines erfindungsgemäßen Systems,

Fig. 3    eine schematische Darstellung einer Fensterung des Frequenzspektrums zur Auswahl des Frequenzbereichs,

Fig. 4    eine schematische Darstellung einer Erkennung von Spitzenwerten im Frequenzbereich,

Fig. 5    eine schematische Darstellung eines Frequenzspektrums einer Statorspannung,

Fig. 6    eine schematische Teildarstellung des Frequenzspektrums der Statorspannung,

Fig. 7    eine schematische Darstellung eines Frequenzspektrums eines Geräusches,

Fig. 8    eine schematische Teildarstellung des Frequenzspektrums des Geräusches.

In den nachfolgenden Figuren werden für die gleichen technischen Merkmale auch von unterschiedlichen Ausführungsbeispielen die identischen Bezugszeichen verwendet.

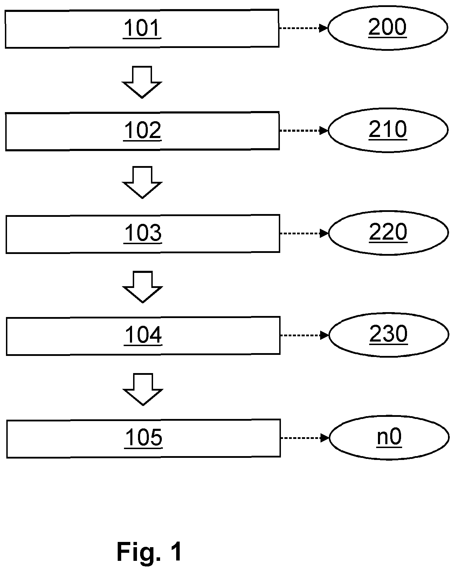

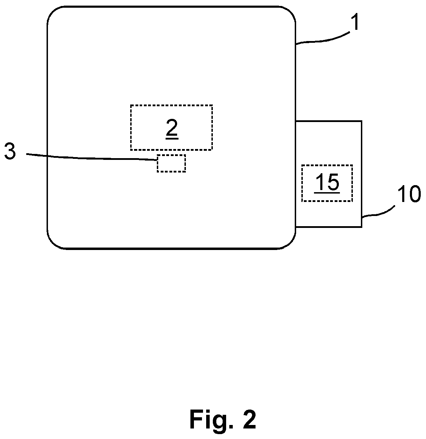

In Figur 1 ist ein erfindungsgemäßes Verfahren zur Bestimmung einer Synchrondrehzahl n0 einer elektrischen Maschine 2, konkret und beispielhaft in der Form einer drehzahlgeregelten Asynchronmaschine 2, bei einer durch die Asynchronmaschine 2 angetriebenen Arbeitsmaschine 1 schematisch mit den zugehörigen Verfahrensschritten visualisiert. Wie in Figur 2 gezeigt ist, kann dabei eine Regelungsvorrichtung 3 zur Drehzahlregelung der Asynchronmaschine 2 vorgesehen sein. Die Regelungsvorrichtung 3 kann zusammen mit der Arbeitsmaschine 1 und/oder der erfindungsgemäßen Verarbeitungsvorrichtung 10 Teil eines erfindungsgemäßen Systems sein. Darüber hinaus können die Asynchronmaschine 2 und die Regelungsvorrichtung 3 Teil der Arbeitsmaschine 1 sein, wohingegen die Verarbeitungsvorrichtung 10 als mobiles Gerät separat von der Arbeitsmaschine 1 ausgeführt sein kann. In einem Speicher 15 der Verarbeitungsvorrichtung 10 kann ein erfindungsgemäßes Computerprogramm nicht-flüchtig gespeichert sein, um von einem nicht explizit dargestellten Prozessor der Verarbeitungsvorrichtung 10 zur Durchführung der Verfahrensschritte eines erfindungsgemäßen Verfahrens ausgeführt zu werden.

Gemäß einem ersten Verfahrensschritt eines erfindungsgemäßen Verfahrens kann ein Initiieren einer Erfassung 101 wenigstens einer mechanischen Messgröße bei der Arbeitsmaschine 1 und/oder elektrischen Maschine 2 erfolgen, um eine für einen Drehklang der Arbeitsmaschine 1 und/oder elektrischen Maschine 2 spezifische Erfassungsinformation 200 zu erhalten. Hierzu können z. B. Sensoren wie Drucksensoren und/oder wenigstens ein Mikrofon bei der Arbeitsmaschine 1 und/oder elektrischen Maschine 2 zum Einsatz kommen. Anschließend kann die Erfassungsinformation 200 weiterverarbeitet werden, wobei zur Verarbeitung die nachfolgenden Verfahrensschritte vorgesehen sind:

- Durchführen einer Frequenzanalyse 102 wie einer Fouriertransformation der Erfassungsinformation 200, um ein Frequenzspektrum 210 der Erfassungsinformation 200 zu erhalten,

- Durchführen einer Auswahl 103 wenigstens eines Frequenzbereichs 220 im Frequenzspektrum 210 anhand einer Taktfrequenz fT (d. h. ggf. auch anhand wenigstens einer Vielfachen der Taktfrequenz fT) der Regelungsvorrichtung 3,

- Durchführen einer Erkennung 104 wenigstens eines Spitzenwertes 230 oder wenigstens oder genau zwei Spitzenwerten 230 in dem (jeweiligen) Frequenzbereich 220, um wenigstens eine für die Synchrondrehzahl n0 spezifische Frequenz f1, f2 zu ermitteln,

- Durchführen der Bestimmung 105 der Synchrondrehzahl n0 anhand der wenigstens einen ermittelten Frequenz f1, f2.

Das Ziel der Bestimmung der Synchrondrehzahl n0 kann es sein, einen Betriebspunkt der Arbeitsmaschine 1 zu bestimmen. Für die hierzu notwendige Bestimmung der Drehzahl der elektrischen Maschine 2, insbesondere der Asynchronmaschine, der Arbeitsmaschine 1 ist in einem ersten Schritt die Ermittlung der aktuellen Synchrondrehzahl n0 der elektrischen Maschine 2 erforderlich. Dabei kann es bei dem erfindungsgemäßen Verfahren möglich sein, dass eine Untersuchung eines Frequenzspektrums bei einem Geräusch der Arbeitsmaschine 1 und/oder elektrischen Maschine 2 zur Bestimmung der aktuellen Synchrondrehzahl führen kann.

Die magnetisch angeregten akustischen Geräusche in elektrischen Maschinen 2 können unterschiedliche Ursachen haben, wie z. B. eine Stator- und Rotornutzung, eine Stator- und Rotorsättigung, eine Kopplung zwischen Grundwellen-Luftspaltfeldern, welche durch die umrichterbedingten Stromgrund- und Stromoberschwingung-Speisung entsteht, der Art der Umrichterspeisung usw. Es kann dabei bei der Bestimmung der aktuellen Synchrondrehzahl n0 ein Problem sein, dass die elektrische Maschine 2 unbekannt ist, und daher sowohl die Stator- und Rotornutzung als auch die Stator- und Rotorsättigung ungekannt sein. Somit ist es vorteilhaft, zur Ermittlung der Synchrondrehzahl n0 die Schwingungskräfte auszuwerten, welche infolge der Kopplung zwischen den Grundwellendrehfeldern, die durch die umrichterbedingten Stromgrund- und Stromoberschwigungen erzeugt werden, im Luftspalt entstehen. Die Stromoberschwingungen können dabei durch eine Art der Umrichterspeisung bestimmt werden. Dabei kann sich das erfindungsgemäße Verfahren für die Bestimmung der Synchrondrehzahl n0 bei einer elektrischen Maschine 2 eignen, welche das asynchrone Pulsweitenmodulation (PWM) Unterschwingungsverfahren mit symmetrischem Dreieck-Trägersignal verwendet.

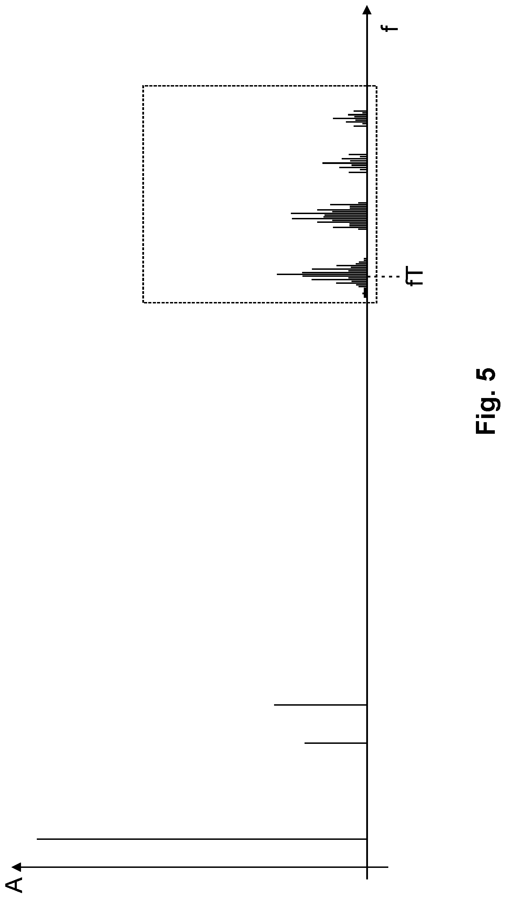

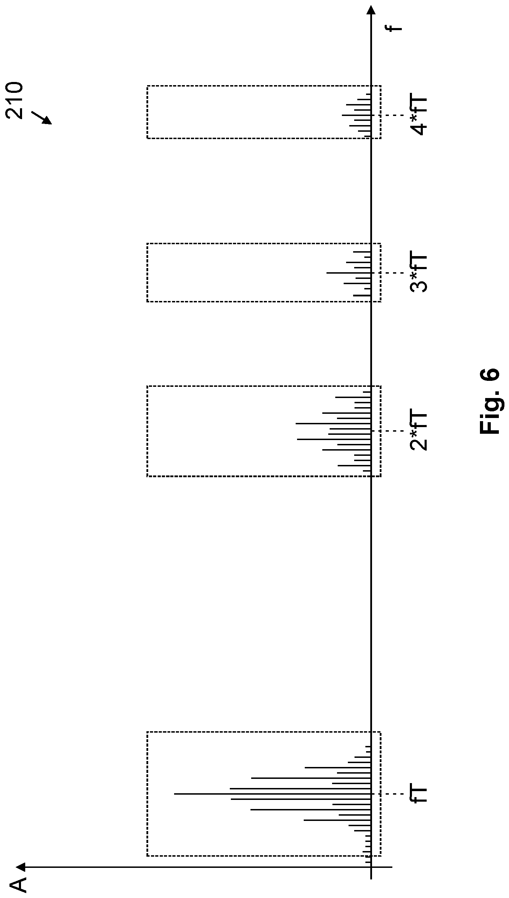

In Figur 5 ist ein beispielhaftes Frequenzspektrum einer Statorspannung der elektrischen Maschine 2 für eine beispielhafte Taktfrequenz fT von 4 kHz dargestellt. Die für das erfindungsgemäße Verfahren relevanten Frequenzen sind durch ein gestricheltes Rechteck hervorgehoben, und in Figur 6 vergrößert dargestellt. Es ist erkennbar, dass sich hierbei um die Vielfachen der Taktfrequenz fT, also z. B. 2*fT = 8 kHz, 3*fT=12 kHz usw., die charakteristischen Frequenzseitenbänder ergeben (in Figur 6 durch gestricheltes Rechteck hervorgehoben). Die gestrichelten Rechtecke um die Taktfrequenz fT bzw. um die Vielfachen hiervon können dabei auch mögliche Fenster für die Fensterung kennzeichnen. Die Amplituden der jeweiligen Frequenzbänder sind zusätzlich vom Aussteuerungsgrad (Modulationsindex) abhängig. Die Frequenzseitenbänder des Stroms und der Spannung lassen sich mit der Taktfrequenz fT und der Grundschwingungsfrequenz fS wie folgt berechnen:

$$f_k = n_1 \cdot f_T \pm n_2 \cdot f_S.$$

Falls $n_1$ eine ungerade ganze Zahl ist, dann ist $n_2$ eine gerade ganze Zahl, und falls $n_1$ eine gerade ganze Zahl ist, dann ist $n_2$ eine ungerade ganze Zahl. Bspw. ist $f_k = f_T \pm 2 \cdot f_S; f_T \pm 4 \cdot f_S; \ldots 2 \cdot f_T \pm f_s; 2 \cdot f_T \pm 3 \cdot f_S; 2 \cdot f_T \pm 5 \cdot f_s; \ldots 3 \cdot f_T \pm 2 \cdot f_s; 3 \cdot f_T \pm 4 \cdot f_S; 3 \cdot f_T \pm 6 \cdot f_S; \ldots$ usw.

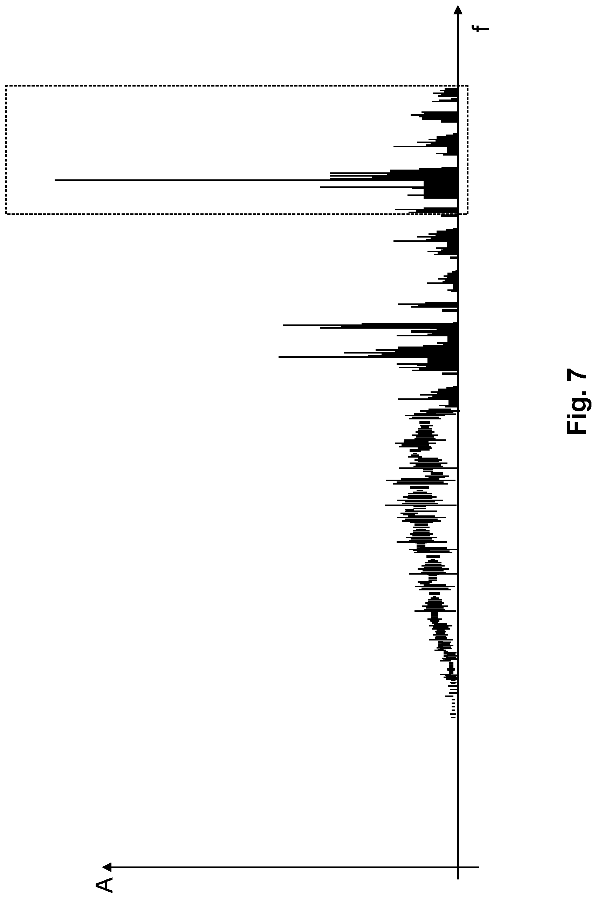

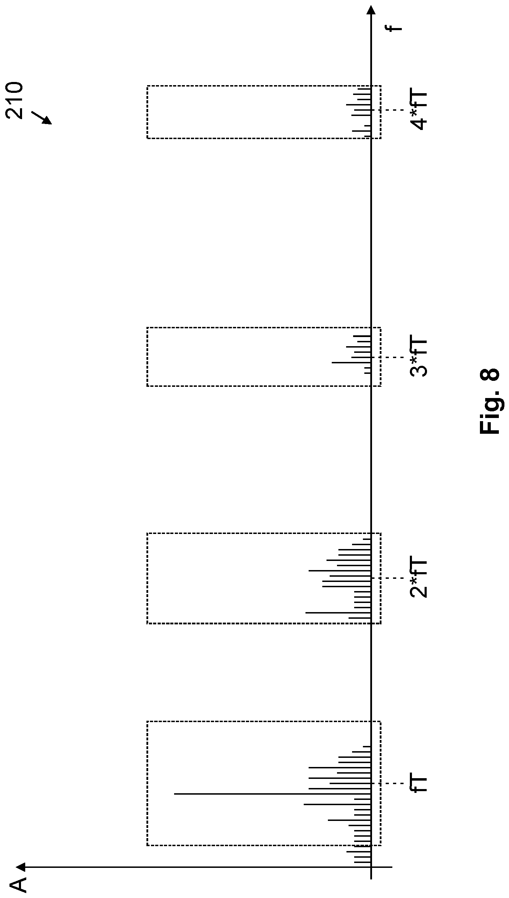

In Figur 7 ist beispielhaft ein Frequenzspektrum 210 eines Geräusches der Arbeitsmaschine 1 betrieben an einer drehzahlgeregelten Asynchronmaschine 2 gezeigt. Mit dem gestrichelten Rechteck sind die für das erfindungsgemäße Verfahren relevanten Frequenzen gekennzeichnet, welche durch die Oberschwingungen des Frequenzumrichters angeregt werden. Eine vergrößerte Darstellung dieser Frequenzen ist schematisch in Figur 8 gezeigt.

Ähnlich wie bei dem Ständerstrom und der Ständerspannung (s. Figur 5 und 6) ergeben sich im Geräusch der Arbeits- bzw. elektrischen Maschine 2 auch charakteristische Frequenzseitenbänder. Diese Frequenzseitenbänder sind in Figur 8 durch gestrichelte Rechtecke hervorgehoben, und ergeben sich ebenfalls um die Vielfachen der Taktfrequenz fT (hier beispielhaft 4 kHz). Allerdings sind diese Geräuschfrequenzen von den Frequenzen der Oberschwingungen (durch die Interaktion zwischen der Grundwelle und der Grundwellen der Oberschwingungen) um die Grundschwingungsfrequenz fS verschoben. Die Frequenzseitenbänder des Geräuschs lassen sich daher mit der Taktfrequenz fT und der Grundschwingungsfrequenz fS wie folgt berechnen:

$$f_k = m_1 \cdot f_T \pm m_2 \cdot f_S.$$

Falls $m_1$ eine ungerade ganze Zahl ist, dann ist $m_2$ eine ungerade ganze Zahl, und falls $m_1$ eine gerade ganze Zahl ist, dann ist $m_2$ eine gerade ganze Zahl. Bspw. ist $f_k = f_T \pm f_S; f_T \pm 3 \cdot f_S; \ldots 2 \cdot f_T \pm 2 \cdot f_S; 2 \cdot f_T \pm 4 \cdot f_S; 2 \cdot f_T \pm 6 \cdot f_S; \ldots 3 \cdot f_T \pm 5 \cdot f_S; 3 \cdot f_T \pm 7 \cdot f_S; 3 \cdot f_T \pm 9 \cdot f_S; \ldots$ usw.

Die aktuelle Grundschwingungsfrequenz fS der Asynchronmaschine lässt sich z. B. aus zwei ermittelten Oberschwingungen des Geräuschsignals $f_{k=1} = f_1 = f_T + f_S$ und $f_{k=2} = f_2 = f_T - f_S$ ermitteln:

$$f_S = \frac{f_{k=1} - f_{k=2}}{2} = \frac{f_T + f_S - (f_T - f_S)}{2} = f_S.$$

Die Synchrondrehzahl n0 ergibt sich weiterhin aus der Grundschwingungsfrequenz fS dividiert mit der Polpaarzahl p der Asynchronmaschine 2:

$$n_0 = \frac{f_S}{p}$$

Sobald die Synchrondrehzahl n0 bekannt ist, kann vorteilhafterweise das in der Schrift EP 2 433 010 B1 offenbarte Verfahren weiter angewendet werden, um den Betriebspunkt der Arbeitsmaschine 1 zu bestimmen. Durch die Analyse bzw. den Vergleich der Frequenzen in mehreren Frequenzfenstern kann ferner noch die Genauigkeit erhöht werden.

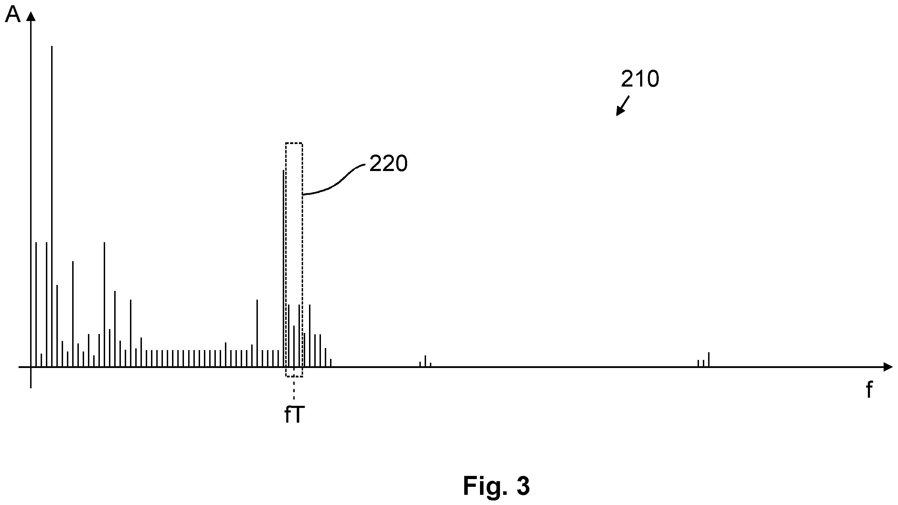

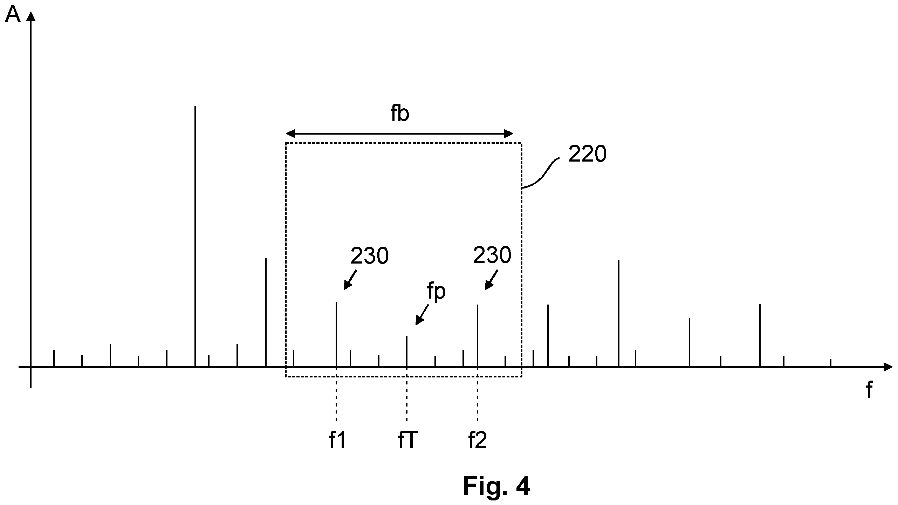

Für die Ermittlung der Oberschwingungen kann das in den Figuren 7 und 8 gezeigte Frequenzspektrum mittels einer Fensterung und einer Spitzenwerterkennung ausgewertet werden. Wie in Figur 3 gezeigt ist, kann optional das Durchführen der Auswahl 103 die Durchführung einer Fensterung des Frequenzspektrums 210 umfassen. Hierzu kann zunächst eine - in Figur 4 gekennzeichnete - Fensterbreite fb anhand einer vordefinierten erwarteten Synchrondrehzahl n0 festgelegt werden. Die minimale Fensterbreite, welche um die Taktfrequenz und/oder eine Vielfache der Taktfrequenz der Regelungsvorrichtung 3, insbesondere eines Frequenzumrichters 3, betrachtet werden muss, lässt sich durch $\pm 2 \cdot$ *maximal zu erwartende Grundschwingungsfrequenz* bestimmen. Anschließend kann die Fensterposition anhand der Taktfrequenz fT festgelegt werden. Im gezeigten Beispiel entspricht die Fensterposition der Taktfrequenz fT, sodass die Taktfrequenz als Mittenfrequenz des Frequenzbereichs 220 aufgefasst werden kann. Alternativ oder zusätzlich kann auch wenigstens eine Fensterung durchgeführt werden, bei welcher jeweils die Fensterposition einer Vielfachen der Taktfrequenz fT entspricht, sodass die Vielfache der Taktfrequenz fT als Mittenfrequenz des Frequenzbereichs 220 aufgefasst werden kann. Dieser Bereich kann anschließend ausgeschnitten werden, d. h. eine Fensterung des Frequenzspektrums 210 zur Auswahl 103 des Frequenzbereichs 220 als einen Bereich um die Taktfrequenz fT mit der festgelegten Fensterbreite fb und Fensterposition durchgeführt werden. Konkret können dabei (z. B. durch Testreihen) die Fensterbreite fb und die Fensterposition für die Fensterung derart festgelegt werden, dass durch die anschließende Erkennung 104 des wenigstens einen Spitzenwertes 230 oder wenigstens oder genau zwei Spitzenwerten 230 im Frequenzbereich 220 nur solche Frequenzen f1, f2 des Frequenzbereichs 220 ermittelt werden, die für die Synchrondrehzahl n0 spezifisch sind (siehe Figur 4). Für die Erkennung der Spitzenwerte 230 können bspw. die Amplituden der Frequenzen im Frequenzbereich 220 mit einem Schwellenwert verglichen werden, um die Frequenzen als für die Synchrondrehzahl n0 spezifische Frequenzen f1, f2 auszuwählen, welche diesen Schwellenwert überschreiten. In anderen Worten können die Amplituden A als Spitzenwerte 230 aufgefasst werden, welche den Schwellenwert übersteigen.

Die aktuelle Synchrondrehzahl n0 der elektrischen Maschine 2 lässt sich somit durch eine Untersuchung des Frequenzspektrums 210 in Bereichen um die Vielfache der Taktfrequenz fT bestimmen. Mögliche Taktfrequenzen können beispielsweise 2 kHz, 4 kHz, 6 kHz, 8 kHz, 10 kHz, 12 kHz, 14 kHz oder 16 kHz sein.

Gemäß Figuren 3 und 4 kann eine Fensterbreite fb des Frequenzbereichs 220 derart festgelegt werden, dass bei der anschließenden Erkennung 104 genau oder wenigstens zwei Spitzenwerte 230 erkannt werden, um bei den Spitzenwerten 230 jeweils eine der für die Synchrondrehzahl n0 spezifischen Frequenzen f1, f2 zu ermitteln. Es kann sich dabei um die Frequenzen $f_{k=1}$ und $f_{k=2}$ der Oberschwingungen handeln, wie es voranstehend beschrieben wurde. Anhand einer Frequenzdifferenz der ermittelten Frequenzen f1, f2 kann, bspw. wie voranstehend beschrieben, anschließend die Synchrondrehzahl n0 bestimmt werden.

In Figur 4 ist beispielhaft der Frequenzbereich um $f_T$=4 kHz abgebildet. Es werden durch die Regelungsvorrichtung die charakteristischen Oberschwingungen angeregt. Es ist ersichtlich, dass sowohl oberhalb als auch unterhalb von $f_T$=4 kHz charakteristische Spitzenwerte 230 (Peaks) vorhanden sind. In dem betrachteten Frequenzbereich 220 finden sich mehrere Peaks, von denen die der Taktfrequenz am nächstliegenden weiter betrachtet werden. Aus den Frequenzen f1, f2 dieser beiden nächstliegenden Spitzenwerte 230 lässt sich die aktuelle Synchrondrehzahl n0 der elektrischen Maschine 2 berechnen.

Sobald die Synchrondrehzahl $n_0$ bekannt ist, kann das Verfahren aus der EP 2 433 010 B1 weiter angewendet werden, um den Betriebspunkt der Arbeitsmaschine zu bestimmen. Zur Bestimmung des aktuellen Schlupfes s der Asynchronmaschine können die aktuelle Drehzahl n und die Synchrondrehzahl $n_0$ der elektrischen Maschine 2 verwendet werden:

$$s = \frac{n_o - n}{n_0}$$

Die aktuelle Drehzahl n kann hierbei mittels herkömmlicher Verfahren aus dem in Figur 3 gezeigten Frequenzspektrum der Erfassungsinformation 200, insbesondere eines Geräusches, bestimmt werden.

Ferner können die nachfolgenden Schritte durchgeführt werden, um den Betriebspunkt anhand der Synchrondrehzahl n0 und einer davon abweichenden aktuellen Drehzahl der Arbeitsmaschine 1 zu bestimmen:

- Ermitteln einer zum Drehklang der Arbeitsmaschine 1 linear proportionalen Drehklangfrequenz aus dem Frequenzspektrum 210,

- Bestimmen der aktuellen Drehzahl der Arbeitsmaschine 1 anhand der ermittelten Drehklangfrequenz,

- Bestimmen einer Drehzahl-Drehmoment-Kennlinie der Asynchronmaschine 2 zumindest anhand vorgegebener Motorparameter wie Bemessungsleistung und Bemessungsdrehzahl und der Synchrondrehzahl n0,

- Bestimmen einer von der Arbeitsmaschine 1 aufgenommenen Leistung aus der ermittelten aktuellen Drehzahl und der Drehzahl-Drehmoment-Kennlinie, wobei der Betriebspunkt durch die aufgenommene Leistung charakterisiert wird.

Notwendige Parameter zur Bestimmung der Drehzahl-Drehmoment-Kennlinie (n-M-Kennlinie) der Asynchronmaschine 2 können ferner aus den Typenschilddaten der Asynchronmaschine 2 abgeleitet werden, beispielsweise ergibt sich das Bemessungs- oder Nenndrehmoment $M_N$ aus dem Quotienten von Bemessungsleistung der Asynchronmaschine 2 ($P_{2N}$) und der Nenndrehzahl ($n_N$) zu

$$M_N = \frac{P_{2N}}{\omega_N} = \frac{P_{2N}}{2\pi n_N}$$

Bei bekanntem Kippmoment $M_K$ und/oder Kippschlupf sK der Asynchronmaschine 2 wird mit der Kloss'schen Gleichung

$$\frac{M}{M_k} = \frac{2}{\frac{s}{s_k} + \frac{s_k}{s}}$$

die Drehzahl-Drehmoment-Kennlinie, n-M-Kennlinie der Asynchronmaschine 2 abgebildet. Mit dem Schlupf s der Asynchronmaschine 2

$$s = \frac{n_o - n}{n_0}$$

ergibt sich der Verlauf der n-M Kennlinie zu

$$M(n) = \frac{2M_k}{\frac{n_0 - n}{n_0 - n_k} + \frac{n_0 - n_k}{n_0 - n}}$$

mit der Kippdrehzahl $n_k$

$$n_k = n_0 \cdot \left( 1 - \left( \sqrt{\left(\frac{M_k}{M_N} \frac{n_0 - n_N}{n_0}\right)^2 - \left(\frac{n_0 - n_N}{n_0}\right)^2} + \frac{M_k}{M_N} \frac{n_0 - n_N}{n_0} \right) \right)$$

Auf diese Weise kann zuverlässig die Arbeitsmaschine 1 anhand der n-M Kennlinie charakterisiert werden, wobei die hierzu notwendige synchrone Drehzahl mittels des erfindungsgemäßen Verfahrens ermittelt wird.

**Bezugszeichenliste**

| | |
|---|---|
| 1 | Arbeitsmaschine |
| 2 | Asynchronmaschine, Asynchronmotor |
| 3 | Regelungsvorrichtung, Frequenzumrichter |
| | |
| 10 | Verarbeitungsvorrichtung |
| 15 | Speicher |
| | |
| 101 | Erfassung |
| 102 | Frequenzanalyse, Fourier-Analyse |
| 103 | Auswahl, Fensterung |
| 104 | Erkennung, Spitzenerkennung |
| 105 | Bestimmung, Berechnung |
| | |
| 200 | Erfassungsinformation |
| 210 | Frequenzspektrum |
| | |
| 220 | Frequenzbereich |
| 230 | Spitzenwert, Peak |
| | |
| f | Frequenz |
| fT | Taktfrequenz |
| fb | Fensterbreite |
| f1 | erste ermittelte Frequenz |
| f2 | zweite ermittelte Frequenz |
| n0 | Synchrondrehzahl, synchrone Drehzahl |

A      Amplitude

**Patentansprüche**

1. Verfahren zur Bestimmung einer Synchrondrehzahl (n0) einer elektrischen Maschine (2), insbesondere einer drehzahlgeregelten Asynchronmaschine (2), bei einer durch die elektrische Maschine (2) angetriebenen Arbeitsmaschine (1), wobei eine Regelungsvorrichtung (3) zur Drehzahlregelung der elektrischen Maschine (2) vorgesehen ist,
wobei die nachfolgenden Schritte durchgeführt werden:

   - Initiieren einer Erfassung (101) wenigstens einer mechanischen Messgröße bei der elektrischen Maschine (2) und/oder der angetriebenen Arbeitsmaschine (1), um eine für einen Drehklang der elektrischen Maschine (2) und/oder der angetriebenen Arbeitsmaschine (1) spezifische Erfassungsinformation (200) zu erhalten,
   - Durchführen einer Frequenzanalyse (102) der Erfassungsinformation (200), um ein Frequenzspektrum (210) der Erfassungsinformation (200) zu erhalten, **gekennzeichnet durch** die nachfolgenden Schritte:
   - Durchführen einer Auswahl (103) wenigstens eines Frequenzbereichs (220) im Frequenzspektrum (210) anhand einer Taktfrequenz (fT) der Regelungsvorrichtung (3),
   - Durchführen einer Erkennung (104) wenigstens eines Spitzenwertes (230) in dem Frequenzbereich (220), um wenigstens eine für die Synchrondrehzahl (n0) spezifische Frequenz (f1, f2) zu ermitteln,
   - Durchführen der Bestimmung (105) der Synchrondrehzahl (n0) anhand der wenigstens einen ermittelten Frequenz (f1, f2).

2. Verfahren nach Anspruch 1, **dadurch gekennzeichnet, dass** wenigstens eine Fensterung des Frequenzspektrums (210) zur Auswahl (103) des wenigstens einen Frequenzbereichs (220) durchgeführt wird, wobei jeweils eine Fensterbreite (fb) und eine Fensterposition für die Fensterung derart festgelegt sind, dass durch die anschließende Erkennung (104) des wenigstens einen Spitzenwertes (230) im jeweiligen Frequenzbereich (220) nur solche Frequenzen (f1, f2) des Frequenzbereichs (220) ermittelt werden, die für die Synchrondrehzahl (n0) spezifisch sind.

3. Verfahren nach Anspruch 1 oder 2, **dadurch gekennzeichnet, dass** die Regelungsvorrichtung (3) als ein Frequenzumrichter (3) ausgebildet ist, wobei der wenigstens eine Frequenzbereich (220) um die Taktfrequenz (fT) und/oder um wenigstens eine Vielfache der Taktfrequenz (fT) ausgewählt wird und insbesondere die Taktfrequenz (fT) und/oder die Vielfache der Taktfrequenz ($f_T$) als Mittenfrequenz aufweist.

4. Verfahren nach Anspruch 3, **dadurch gekennzeichnet, dass** das Durchführen der Auswahl (103) die nachfolgenden Schritte umfasst:

   - Festlegen einer Fensterbreite (fb) anhand einer vordefinierten erwarteten Synchrondrehzahl (n0),
   - Festlegen wenigstens einer Fensterposition anhand der Taktfrequenz (fT), insbesondere an der Taktfrequenz (fT) und/oder der Vielfachen der Taktfrequenz (fT),
   - Durchführen einer Fensterung des Frequenzspektrums (210) zur Auswahl (103) des Frequenzbereichs (220) als einen Bereich um die Taktfrequenz (fT) und/oder um die Vielfache der Taktfrequenz (fT) mit der festgelegten Fensterbreite (fb) und Fensterposition,

   wobei die Schritte zum Durchführen der Auswahl wiederholt für unterschiedliche Fensterpositionen durchgeführt werden.

5. Verfahren nach einem der Ansprüche 3 oder 4, **dadurch gekennzeichnet, dass** die Taktfrequenz (fT) im Bereich von 1 kHz bis 20 kHz, vorzugsweise 2 kHz bis 16 kHz, bevorzugt 4 kHz bis 12 kHz liegt.

6. Verfahren nach einem der vorhergehenden Ansprüche, **dadurch gekennzeichnet, dass** sich die mechanische Messgröße von einer elektrischen Messgröße der elektrischen Maschine (2) und/oder der Regelungsvorrichtung (3) unterscheidet und vorzugsweise unabhängig von einem Regelungsparameter der Regelungsvorrichtung (3) erfasst wird.

7. Verfahren nach einem der vorhergehenden Ansprüche, **dadurch gekennzeichnet, dass** die mechanische Messgröße wenigstens eine der nachfolgenden Messgrö-ßen umfasst:

   - einen Druck,

- einen Differenzdruck,
- eine Kraft,
- eine Vibration,
- einen Körperschall,
- einen Luftschall.

8. Verfahren nach einem der vorhergehenden Ansprüche, **dadurch gekennzeichnet, dass** eine Fensterbreite (fb) des Frequenzbereichs (220) derart festgelegt ist, dass bei der anschließenden Erkennung (104) genau oder wenigstens zwei Spitzenwerte (230) erkannt werden, um bei den Spitzenwerten (230) jeweils eine der für die Synchrondrehzahl (n0) spezifischen Frequenzen (f1, f2) zu ermitteln, wobei anhand einer Frequenzdifferenz der ermittelten Frequenzen (f1, f2) die Synchrondrehzahl (n0) bestimmt wird.

9. Verfahren nach einem der vorhergehenden Ansprüche, **dadurch gekennzeichnet, dass** die Fensterbreite (fb) des Frequenzbereichs (220) mindestens das 1,5-fache oder mindestens das Zweifache einer zu erwarteten Synchronfrequenz beträgt.

10. Verfahren nach einem der vorhergehenden Ansprüche, **dadurch gekennzeichnet, dass** die bestimmte Synchrondrehzahl (n0) verwendet wird, um einen Betriebspunkt der Arbeitsmaschine (1) zu bestimmen.

11. Verfahren nach Anspruch 10 **dadurch gekennzeichnet, dass** die nachfolgenden Schritte durchgeführt werden, um den Betriebspunkt anhand der Synchrondrehzahl (n0) und einer davon abweichenden aktuellen Drehzahl der Arbeitsmaschine (1) zu bestimmen:

   - Ermitteln einer zum Drehklang der elektrischen Maschine (2) und/oder der Arbeitsmaschine (1) linear proportionalen Drehklangfrequenz aus dem Frequenzspektrum (210),
   - Bestimmen der aktuellen Drehzahl der Arbeitsmaschine (1) anhand der ermittelten Drehklangfrequenz,
   - Bestimmen einer Drehzahl-Drehmoment-Kennlinie der elektrischen Maschine (2) zumindest anhand vorgegebener Motorparameter wie Bemessungsleistung und Bemessungsdrehzahl und der Synchrondrehzahl (n0),
   - Bestimmen einer von der Arbeitsmaschine (1) aufgenommenen Leistung aus der ermittelten aktuellen Drehzahl und der Drehzahl-Drehmoment-Kennlinie, wobei der Betriebspunkt durch die aufgenommene Leistung charakterisiert wird.

12. Verarbeitungsvorrichtung (10) zur Datenverarbeitung, umfassend Mittel zur Ausführung der Schritte eines Verfahrens nach einem der Ansprüche 1 bis 11.

13. System, aufweisend:

   - eine Arbeitsmaschine (1),
   - eine elektrische Maschine (2) der Arbeitsmaschine (1) zum Antreiben der Arbeitsmaschine (1),
   - eine Regelungsvorrichtung (3) der Arbeitsmaschine (1) zur Drehzahlregelung der elektrischen Maschine (2),
   - eine Verarbeitungsvorrichtung (10) nach Anspruch 12.

14. System nach Anspruch 13, **dadurch gekennzeichnet, dass** die Arbeitsmaschine (1) als eine Pumpenanordnung, insbesondere Kreiselpumpenanordnung, ausgebildet ist und die Verarbeitungsvorrichtung (10) separat von der Arbeitsmaschine (1) ausgeführt ist, insbesondere in der Form eines mobilen Geräts.

15. Computerprogramm, umfassend Befehle, die bei der Ausführung des Computerprogramms durch eine Verarbeitungsvorrichtung (10) nach Anspruch 12 diese veranlassen, ein Verfahren nach einem der Ansprüche 1 bis 11 auszuführen.

**Claims**

1. Method for determining a synchronous speed (n0) of an electric machine (2), in particular a speed-regulated asynchronous machine (2), in a work machine (1) driven by the electric machine (2), wherein a regulating device (3) is provided for speed regulation of the electric machine (2),
   wherein the following steps are carried out:

- initiating a detection (101) of at least one mechanical measured variable in the electric machine (2) and/or the driven work machine (1) to obtain an item of detection information (200) specific for a rotational sound of the electric machine (2) and/or the driven work machine (1),
- carrying out a frequency analysis (102) of the detection information (200) to obtain a frequency spectrum (210) of the detection information (200), **characterized by** the following steps:
- carrying out a selection (103) of at least one frequency range (220) in the frequency spectrum (210) on the basis of a clock frequency (fT) of the regulating device (3),
- carrying out a recognition (104) of at least one peak value (230) in the frequency range (220) to ascertain at least one frequency (f1, f2) specific for the synchronous speed (n0),
- carrying out the determination (105) of the synchronous speed (n0) on the basis of the at least one ascertained frequency (f1, f2).

2. Method according to Claim 1, **characterized in that** at least one windowing of the frequency spectrum (210) is carried out to select (103) the at least one frequency range (220), wherein in each case a window width (fb) and a window position for the windowing are defined in such a way that by the subsequent recognition (104) of the at least one peak value (230) in the respective frequency range (220), only those frequencies (f1, f2) of the frequency range (220) are ascertained which are specific for the synchronous speed (n0).

3. Method according to Claim 1 or 2, **characterized in that** the regulating device (3) is designed as a frequency converter (3), wherein the at least one frequency range (220) is selected around the clock frequency (fT) and/or around at least one multiple of the clock frequency (fT) and in particular has the clock frequency (fT) and/or the multiple of the clock frequency ($f_T$) as the centre frequency.

4. Method according to Claim 3, **characterized in that** carrying out the selection (103) comprises the following steps:

- defining a window width (fb) on the basis of a predefined expected synchronous speed (n0),
- defining at least one window position on the basis of the clock frequency (fT), in particular at the clock frequency (fT) and/or the multiple of the clock frequency (fT),
- carrying out a windowing of the frequency spectrum (210) to select (103) the frequency range (220) as a range around the clock frequency (fT) and/or around the multiple of the clock frequency (fT) using the defined window width (fb) and window position,

wherein the steps for carrying out the selection are carried out repeatedly for different window positions.

5. Method according to one of Claims 3 or 4, **characterized in that** the clock frequency (fT) is in the range from 1 kHz to 20 kHz, preferably 2 kHz to 16 kHz, preferably 4 kHz to 12 kHz.

6. Method according to any one of the preceding claims, **characterized in that** the mechanical measured variable differs from an electrical measured variable of the electric machine (2) and/or the regulating device (3) and is preferably detected independently of a regulating parameter of the regulating device (3).

7. Method according to any one of the preceding claims, **characterized in that** the mechanical measured variable comprises at least one of the following measured variables:

- a pressure,
- a differential pressure,
- a force,
- a vibration,
- a structure-borne sound,
- an airborne sound.

8. Method according to any one of the preceding claims, **characterized in that** a window width (fb) of the frequency range (220) is defined in such a way that upon the subsequent recognition (104), precisely or at least two peak values (230) are recognized, in order to ascertain one of the frequencies (f1, f2) specific for the synchronous speed (n0) at each one of the peak values (230), wherein the synchronous speed (n0) is determined on the basis of a frequency difference of the ascertained frequencies (f1, f2).

9. Method according to any one of the preceding claims, **characterized in that** the window width (fb) of the frequency range (220) is at least 1.5 times or at least two times a synchronous frequency to be expected.

10. Method according to any one of the preceding claims, **characterized in that** the determined synchronous speed (n0) is used to determine an operating point of the work machine (1).

11. Method according to Claim 10, **characterized in that** the following steps are carried out to determine the operating point on the basis of the synchronous speed (n0) and a present speed of the work machine (1) deviating therefrom:

- ascertaining a rotational sound frequency linearly proportional to the rotational sound of the electric machine (2) and/or the work machine (1) from the frequency spectrum (210),
- determining the present speed of the work machine (1) on the basis of the ascertained rotational sound frequency,
- determining a speed-torque characteristic curve of the electric machine (2) at least on the basis of predetermined motor parameters such as rated power and rated speed and the synchronous speed (n0),
- determining a power consumed by the work machine (1) from the ascertained present speed and the speed-torque characteristic curve, wherein the operating point is **characterized by** the consumed power.

12. Processing device (10) for data processing, comprising means for executing the steps of a method according to any one of Claims 1 to 11.

13. System, comprising:

- a work machine (1),
- an electric machine (2) of the work machine (1) for driving the work machine (1),
- a regulating device (3) of the work machine (1) for speed regulation of the electric machine (2),
- a processing device (10) according to Claim 12.

14. System according to Claim 13, **characterized in that** the work machine (1) is designed as a pump assembly, in particular a centrifugal pump assembly, and the processing device (10) is embodied separately from the work machine (1), in particular in the form of a mobile device.

15. Computer program, comprising commands which, upon the execution of the computer program by a processing device (10) according to Claim 12, prompt it to carry out a method according to any one of Claims 1 to 11.

**Revendications**

1. Procédé permettant de déterminer une vitesse synchrone (n0) d'une machine électrique (2), en particulier d'une machine asynchrone régulée en vitesse de rotation (2), sur une machine de travail (1) entraînée par la machine électrique (2), dans lequel un dispositif de régulation (3) est prévu pour réguler la vitesse de rotation de la machine électrique (2),

dans lequel les étapes suivantes sont exécutées, consistant à :

- lancer une détection (101) d'au moins une grandeur de mesure mécanique sur la machine électrique (2) et/ou la machine de travail entraînée (1) afin d'obtenir une information de détection (200) spécifique à un bruit de rotation de la machine électrique (2) et/ou de la machine de travail entraînée (1),
- effectuer une analyse de fréquence (102) de l'information de détection (200) afin d'obtenir un spectre de fréquence (210) de l'information de détection (200),

**caractérisé par** les étapes suivantes consistant à :

- effectuer une sélection (103) d'au moins une plage de fréquence (220) dans le spectre de fréquence (210) à l'aide d'une fréquence d'horloge (fT) du dispositif de régulation (3),
- effectuer une reconnaissance (104) d'au moins une valeur maximale (230) dans la plage de fréquence (220) afin d'établir au moins une fréquence (f1, f2) spécifique à la vitesse synchrone (n0),
- effectuer la détermination (105) de la vitesse synchrone (n0) à l'aide de ladite au moins une fréquence (f1, f2) établie.

**2.** Procédé selon la revendication 1, **caractérisé en ce qu'**un moins un fenêtrage du spectre de fréquence (210) est effectué pour sélectionner (103) ladite au moins une plage de fréquence (220), dans lequel respectivement une largeur de fenêtre (fb) et une position de fenêtre sont définies pour le fenêtrage de telle sorte que la reconnaissance consécutive (104) de ladite une valeur maximale (230) dans la plage de fréquence (220) respective ne permet d'établir que les fréquences (f1, f2) de la plage de fréquence (220) qui sont spécifiques à la vitesse synchrone (n0).

**3.** Procédé selon la revendication 1 ou 2, **caractérisé en ce que** le dispositif de régulation (3) est réalisé sous la forme d'un convertisseur de fréquence (3), dans lequel ladite au moins une plage de fréquence (220) est sélectionnée autour de la fréquence d'horloge (fT) et/ou autour d'au moins un multiple de la fréquence d'horloge (fT), et présente en particulier la fréquence d'horloge (fT) et/ou le multiple de la fréquence d'horloge (fT) en tant que fréquence centrale.

**4.** Procédé selon la revendication 3, **caractérisé en ce que** l'exécution de la sélection (103) comprend les étapes suivantes consistant à :

- définir une largeur de fenêtre (fb) à l'aide d'une vitesse synchrone (n0) attendue prédéfinie,
- définir au moins une position de fenêtre à l'aide de la fréquence d'horloge (fT), en particulier au niveau de la fréquence d'horloge (fT) et/ou du multiple de la fréquence d'horloge (fT),
- effectuer un fenêtrage du spectre de fréquence (210) pour sélectionner (103) la plage de fréquence (220) comme une zone autour de la fréquence d'horloge (fT) et/ou autour du multiple de la fréquence d'horloge (fT) avec la largeur de fenêtre (fb) et la position de fenêtre définies,
dans lequel les étapes consistant à effectuer la sélection sont effectuées de manière répétée pour différentes positions de fenêtre.

**5.** Procédé selon l'une quelconque des revendications 3 ou 4, **caractérisé en ce que** la fréquence d'horloge (fT) est située dans la plage de 1 kHz à 20 kHz, de préférence de 2 kHz à 16 kHz, de préférence de 4 kHz à 12 kHz.

**6.** Procédé selon l'une quelconque des revendications précédentes, **caractérisé en ce que** la grandeur de mesure mécanique est différente d'une grandeur de mesure électrique de la machine électrique (2) et/ou du dispositif de régulation (3) et est de préférence détectée indépendamment d'un paramètre de régulation du dispositif de régulation (3).

**7.** Procédé selon l'une quelconque des revendications précédentes, **caractérisé en ce que** la grandeur de mesure mécanique comprend au moins l'une des grandeurs de mesure suivantes :

- une pression,
- une pression différentielle,
- une force,
- une vibration,
- un bruit de structure,
- un bruit aérien.

**8.** Procédé selon l'une quelconque des revendications précédentes, **caractérisé en ce qu'**une largeur de fenêtre (fb) de la plage de fréquence (220) est définie de telle sorte que lors de la reconnaissance (104) consécutive, exactement ou au minimum deux valeurs de crête (230) sont reconnues afin d'établir au niveau des valeurs maximales (203) respectivement l'une des fréquences (f1, f2) spécifiques à la vitesse synchrone (n0), dans lequel la vitesse synchrone (n0) est déterminée à l'aide d'une différence de fréquence des fréquences (f1, f2) établies.

**9.** Procédé selon l'une quelconque des revendications précédentes, **caractérisé en ce que** la largeur de fenêtre (fb) de la plage de fréquence (220) mesure au moins 1,5 fois ou au moins deux fois une fréquence synchrone attendue.

**10.** Procédé selon l'une quelconque des revendications précédentes, **caractérisé en ce que** la vitesse synchrone (n0) déterminée est utilisée pour déterminer un point de fonctionnement de la machine de travail (1).

**11.** Procédé selon la revendication 10, **caractérisé en ce que** les étapes suivantes sont effectuées pour déterminer le point de fonctionnement à l'aide de la vitesse synchrone (n0) et d'une vitesse de rotation actuelle de la machine de travail (1) différente de celle-ci :

- établir à partir du spectre de fréquence (210) une fréquence de bruit de rotation linéairement proportionnelle au bruit de rotation de la machine électrique (2) et/ou de la machine de travail (1),

- déterminer la vitesse de rotation actuelle de la machine de travail (1) à l'aide de la fréquence de bruit de rotation établie,
- déterminer une caractéristique vitesse de rotation/ couple de la machine électrique (2) au moins à l'aide de paramètres de moteur prédéfinis, tels que la puissance de calcul et la vitesse de rotation de calcul et la vitesse synchrone (n0),
- déterminer une puissance absorbée par la machine de travail (1) à partir de la vitesse de rotation actuelle établie et de la caractéristique vitesse de rotation/ couple, le point de fonctionnement étant **caractérisé par** la puissance absorbée.

12. Dispositif de traitement (10) pour le traitement de données, comprenant des moyens pour exécuter les étapes d'un procédé selon l'une quelconque des revendications 1 à 11.

13. Système, présentant :

- une machine de travail (1),
- une machine électrique (2) de la machine de travail (1) pour entraîner la machine de travail (1),
- un dispositif de régulation (3) de la machine de travail (1) pour la régulation de vitesse de rotation de la machine électrique (2),
- un dispositif de traitement (10) selon la revendication 12.

14. Système selon la revendication 13, **caractérisé en ce que** la machine de travail (1) est réalisée sous la forme d'un agencement de pompe, en particulier d'un agencement de pompe centrifuge, et le dispositif de traitement (10) est configuré séparément de la machine de travail (1), en particulier sous la forme d'un appareil mobile.

15. Programme informatique, comprenant des instructions qui, lorsque le programme informatique est exécuté par un dispositif de traitement (10) selon la revendication 12, font que celui-ci exécute un procédé selon l'une quelconque des revendications 1 à 11.

**Fig. 1**

**Fig. 2**

EP 4 200 971 B1

EP 4 200 971 B1

**Fig. 3**

Fig. 4

EP 4 200 971 B1

**Fig. 5**

**Fig. 6**

EP 4 200 971 B1

Fig. 7

EP 4 200 971 B1

**Fig. 8**

EP 4 200 971 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009022107 A1
- EP 2433010 B1
- DE 102017213131 A1
- DE 102006008048 A1
- WO 2010133425 A